# EUROPÄISCHE PATENTSCHRIFT

(11) **EP 3 387 330 B1**
(45) Veröffentlichungstag und Bekanntmachung des Hinweises auf die Patenterteilung: **21.04.2021**
(21) Anmeldenummer: 16809771.5
(22) Anmeldetag: 08.12.2016
(51) Int. Cl.: B01D 53/04, B01D 53/26, B01J 20/10, B01J 20/18, B01J 20/20, B01J 20/22, B01J 20/28, B01J 20/32, B01J 20/34, F25B 17/08, F25B 37/00, F28D 21/00, F28F 27/00

(54) **WÄRMETAUSCHER UND VERFAHREN ZU DESSEN VERWENDUNG**
HEAT EXCHANGER AND METHOD FOR ITS USE
ÉCHANGEUR THERMIQUE ET PROCÉDÉ POUR SON UTUILISATION

(30) Priorität: 09.12.2015 DE 102015224660
(43) Veröffentlichungstag der Anmeldung: 17.10.2018
(73) Patentinhaber: Fraunhofer-Gesellschaft zur Förderung der angewandten Forschung e.V., 80686 München (DE)
(72) Erfinder: KOLB, Gunther, 67435 Neustadt/Weinstrasse (DE); HENNINGER, Stefan, 79346 Endingen (DE); MUNZ, Gunther, 79364 Malterdingen (DE); KUMMER, Harry, 79235 Vogtsburg-Burkheim (DE); JEREMIAS, Felix, 13353 Berlin (DE)
(74) Vertreter: Friese Goeden Patentanwälte PartGmbB
(86) Internationale Anmeldenummer: PCT/EP2016/080233
(87) Internationale Veröffentlichungsnummer: WO 2017/097892

(56) Entgegenhaltungen:
- EP-A1- 2 135 665
- EP-A1- 2 253 813
- DE-A1- 10 233 762
- US-A1- 2008 039 665
- US-A1- 2010 137 657
- Gunther M. Munz et al.: "First results of a coated heat exchanger for the use in dehumidification and cooling processes", Applied Thermal Engineering Volume 61, Issue 2, 3 November 2013, Pages 878-883 Applied Thermal Engineering, Bd. 61 November 2013 (2013-11), Seiten 878-883, XP002767977, Gefunden im Internet: URL:http://ac.els-cdn.com/S135943111300627 3/1-s2.0-S1359431113006273-main.pdf?_tid=f 4e130b0-04ab-11e7-b200-00000aacb362&acdnat =1489052405_6132133ac03cd928d250a5fd16ae24 88 [gefunden am 2017-03-09] in der Anmeldung erwähnt

## Beschreibung

Die Erfindung betrifft einen Wärmetauscher mit zumindest einem Sorptionskanal, in welchem ein Sorptionsmittel angeordnet ist und welcher von einem Fluid durchströmbar ist. Weiterhin betrifft die Erfindung ein Verfahren zur Erwärmung und/oder zum Konditionieren eines Gasstromes, bei welchem ein mehrere verschiedene Komponenten enthaltender Gasstrom in einen Sorptionskanal eingebracht wird, in welchem ein Sorptionsmittel angeordnet ist, sodass zumindest eine Komponente im Sorptionsmittel gebunden wird. Vorrichtungen und Verfahren dieser Art können zur Entfeuchtung, zur Klimatisierung oder als Teil einer geschlossenen, sorptiven Kältemaschine oder Wärmepumpe eingesetzt werden.

Aus G.M. Munz et al.: "First results of a coated heat exchanger for the use in dehumidification and cooling process, Applied Thermal Engineering 61 (2013) 878-883 ist eine Vorrichtung dieser Art bekannt. Diese enthält einen Kreuzstromwärmetauscher, dessen Begrenzungsflächen teilweise mit einem Sorptionsmittel beschichtet sind. Hierdurch kann zur Verbesserung des Innenraumklimas in einem Gebäude die dem Raum zugeführte Außenluft entfeuchtet werden. Insbesondere in heißen und feuchten Klimazonen kann hierdurch das Innenraumklima verbessert werden, sodass Energie zur zusätzlichen Kühlung eingespart werden kann. Diese bekannte Vorrichtung muss nach vollständiger Beladung des Sorptionsmittels regeneriert werden. Hierzu wird dem Wärmetauscher Wärme über ein Wärmeträgerfluid zugeführt, welche dazu führt, dass die gespeicherte Feuchtigkeit aus dem Sorptionsmittel ausgetrieben wird.

Diese bekannte Vorrichtung weist jedoch den Nachteil auf, dass neben dem Sorptionsmittel auch das Gehäuse des Wärmetauschers sowie die zur Zufuhr des Wärmeträgers verwendeten Rohrleitungen erwärmt werden. Der energetische Wirkungsgrad ist somit nur gering.

Aus der Praxis ist weiterhin bekannt, die Erwärmung eines solchen Wärmetauschers durch Heißluft, Heizwasser oder Thermoöl vorzunehmen. Die Erwärmung durch Heizwasser ist dabei auf Temperaturen unter 100°C beschränkt, sofern das System nicht mit Überdruck betrieben wird. Dies erfordert jedoch eine verstärkte mechanische Auslegung und dadurch die Erwärmung zusätzlicher Massen, welche sich durch die mechanisch verstärkte Konstruktion ergeben. Die Verwendung von Thermoöl kann zwar Wärme bei höheren Temperaturen übertragen, stellt jedoch ein Umweltproblem bei der Entsorgung oder im Falle von Leckagen dar.

Die US 2008/0039665 A1 beschreibt eine Vorrichtung gemäß Oberbegriff von Anspruch 1 und ein Verfahren gemäß Oberbegriff von Anspruch 7 zum Trocknen von Ethanol, umfassend eine erste Reaktionskammer zur Entfernung von Wasser vom feuchten Ethanol, eine Zufuhrleitung zum Einleiten von feuchtem Ethanol in die Reaktionskammer, eine Ausfuhrleitung zur Entfernung von trockenem Ethanol aus der Reaktionskammer, eine Brennstoffzufuhrleitung zur Zufuhr von Brennstoff in die Reaktionskammer, und Sorbensteilchen sowie Katalysatorteilchen , die in der Reaktionskammer vorgesehen sind.

Ausgehend vom Stand der Technik liegt der Erfindung somit die Aufgabe zugrunde, ein Verfahren und eine Vorrichtung zur Sorption einzelner Komponenten eines Gasstromes anzugeben, welches gegenüber dem Stand der Technik einen verbesserten Wirkungsgrad aufweist.

Die Aufgabe wird erfindungsgemäß durch eine Vorrichtung gemäß Anspruch 1 und ein Verfahren nach Anspruch 7 gelöst.

Vorteilhafte Weiterbildungen der Erfindung finden sich in den Unteransprüchen.

Erfindungsgemäß wird ein Wärmetauscher vorgeschlagen, welcher zumindest einen Sorptionskanal aufweist. Der Wärmetauscher kann in unterschiedlichen Ausführungsformen der Erfindung unterschiedliche Bauformen aufweisen, und beispielsweise als Rohrbündelwärmeübertrager, als Kreuzstromwärmetauscher oder als andere, an sich bekannte Bauform ausgeführt sein. Wesentlich ist, dass der Wärmetauscher zumindest einen Sorptionskanal aufweist, durch welchen der zu konditionierende Gasstrom geleitet wird. Daneben kann der Wärmetauscher in einigen Ausführungsformen der Erfindung optional weitere Fluidkanäle aufweisen, durch welche dem Wärmetauscher warme oder kalte Wärmeträgerfluide oder exotherm reagierende Brennstoffe zugeführt werden können.

In dem zumindest einen Sorptionskanal ist zumindest ein Sorptionsmittel angeordnet. Das Sorptionsmittel ist so ausgewählt, dass eine vorgebbare Komponente des Gasstromes absorbiert wird, wenn der Gasstrom im Sorptionskanal strömt. In einigen Ausführungsformen der Erfindung kann der Gasstrom Umgebungsluft sein. Das Sorptionsmittel kann dann dazu eingerichtet sein, Wasser oder Schadstoffe aus der zugeführten Umgebungsluft zu absorbieren, sodass am Ausgang des Wärmetauschers ein entfeuchteter und/oder schadstoffreduzierter Luftstrom zur Verfügung steht, welcher beispielsweise als Zuluftstrom einer maschinellen Lüftungsanlage für ein Gebäude, ein Fahrzeug oder ein Flugzeug verwendet werden kann. In anderen Ausführungsformen kann der Wärmetauscher Teil einer Sorptionskältemaschine bzw. einer Sorptionswärmepumpe sein. In diesem Fall ist das im Sorptionskanal strömende Fluid ein Kältemittel, welches beispielsweise Wasser, Alkohol und/oder CO₂ enthält.

Unabhängig davon, ob der erfindungsgemäße Wärmetauscher zur Entfeuchtung, zur Klimatisierung oder als Teil einer geschlossenen Sorptionskältemaschine bzw. Sorptionswärmepumpe eingesetzt wird, muss dieser nach einem Beladezyklus, in welchem zumindest eine Komponente an das Sorptionsmittel angelagert wurde, wieder regeneriert bzw. entladen werden. Hierzu wird erfindungsgemäß vorgeschlagen, einen flüssigen oder gasförmigen Brennstoff exotherm im Wärmetauscher umzusetzen, sodass die entstehende Wärme zumindest teilweise dem Sorptionsmittel zugeführt wird. Hierdurch wird die zur Regeneration bzw. Desorption erforderliche Wärme unmittelbar im Wärmetauscher erzeugt, sodass die unnötige Erwärmung von Anschlussleitungen und Wärmeverluste durch lange Transportwege der Wärme vermieden werden. Weiterhin kann der Verbrennungsprozess bei Umgebungsdruck, bei geringem Überdruck oder bei nur geringem Unterdruck ablaufen, sodass eine verstärkte mechanische Konstruktion des Wärmetauschers vermieden wird, welche durch zusätzlichen Materialeinsatz die Aufwendung zusätzlicher Wärmemengen erfordern würde.

Zur exothermen Umsetzung des Brennstoffes ist ein Katalysator vorgesehen, welcher ebenfalls im Inneren oder zumindest an einer äußeren Begrenzungswand des Wärmetauschers angeordnet ist. Der Katalysator kann in einigen Ausführungsformen der Erfindung in Form von Mikro- oder Nanopartikeln zumindest auf Teilflächen des Wärmetauschers aufgebracht sein. In anderen Ausführungsformen der Erfindung kann der Katalysator in Form eines Metallnetzes, einer Beschichtung oder einer Metallplatte im Inneren des Wärmetauschers angeordnet sein.

Der exotherm im Inneren des Wärmetauschers reagierende Brennstoff kann beispielsweise ein Alkohol sein. In einigen Ausführungsformen der Erfindung kann der Brennstoff Methanol enthalten. In anderen Ausführungsformen der Erfindung kann der Brennstoff ein Gemisch verschiedener Kohlenwasserstoffe sein, beispielsweise gereinigtes Benzin, Terpentin oder Petroleum. In wieder anderen Ausführungsformen der Erfindung kann der Brennstoff gasförmig sein, und beispielsweise Kohlenwasserstoffe wie Methan, Propan, Butan, Acetylen oder ein Gemisch dieser Stoffe enthalten oder daraus bestehen. In einigen Ausführungsformen der Erfindung kann der Brennstoff Erdgas sein oder Erdgas enthalten. Hierdurch ergibt sich eine besonders einfache Integration des Wärmetauschers in eine bestehende Hausinstallation, sodass der Wärmetauscher als Teil einer Sorptionswärmepumpe zur Beheizung des Gebäudes verwendet werden kann oder Teil einer Entfeuchtungs- oder Klimatisierungseinrichtung sein kann.

Ein flüssiger Brennstoff kann dem Wärmetauscher über einen Verdampfer, eine Zerstäuberdüse oder einen Ultraschallvernebler zugeführt werden. Der Brennstoff kann in einen Gasstrom eingebracht werden, sodass der zur Umsetzung erforderliche Sauerstoff gleichzeitig mit dem Brennstoff an den Katalysator gelangt, an welchem die exotherme Umsetzung erfolgt. Das Brennstoff-/Luftgemisch kann ein stöchiometrisches Verhältnis aufweisen, sodass eine vollständige Umsetzung des Brennstoffes im Wärmetauscher erfolgt und im Abgasstrom nur CO₂ und Wasser auftreten. Hierdurch wird die Erzeugung toxischer Abgase vermieden.

Der erfindungsgemäße Wärmetauscher enthält einen Grundträger mit einer ersten Seite und einer gegenüberliegenden zweiten Seite, wobei der zumindest eine Katalysator auf der zweiten Seite angeordnet ist und das Sorptionsmittel auf der ersten Seite angeordnet ist. Der Grundträger kann aus einem Blech gefertigt sein, welches beispielsweise Aluminium, Kupfer oder Edelstahl enthält oder daraus besteht. Das Blech kann eine Dicke von etwa 0,1 mm bis etwa 0,5 mm aufweisen. Da der erfindungsgemäße Wärmetauscher nur mit geringem Überdruck arbeitet, welcher lediglich durch den Staudruck des Sorptionskanals und der gegebenenfalls weiteren Fluidkanäle gegeben ist, reichen geringe Wandstärken aus, um die mechanische Stabilität des Wärmetauschers sicherzustellen. Diese geringen Wandstärken weisen nur einen geringen thermischen Widerstand auf, sodass die auf der zweiten Seite des Grundträgers erzeugte Wärme rasch und verlustarm auf das Sorptionsmittel auf der ersten Seite einwirken kann. Diese Ausführungsform der Erfindung weist den Vorteil auf, dass der Brennstoff oder dessen Verbrennungsprodukte nicht auf das Sorptionsmittel einwirken können, sodass dessen Beschädigung bzw. Beladung mit unerwünschten Substanzen vermieden wird.

In einigen Ausführungsformen der Erfindung können der Katalysator und das Sorptionsmittel auf derselben Seite des Grundträgers angeordnet sein. In diesem Fall wird dem Wärmetauscher im ersten Verfahrensschritt das Arbeitsmedium zugeführt und im zweiten Schritt zur Regeneration das Brennstoff-/Luftgemisch zugeführt. Die Umsetzung erfolgt dabei direkt an der Oberfläche des Sorptionsmittels, sodass Wärmewiderstände weiter reduziert sind.

In einigen Ausführungsformen der Erfindung kann der Katalysator und/oder das Sorptionsmittel durch Siebdruck und/oder durch Aufrakeln und/oder durch Sputtern und/oder durch Washcoating des Grundträgers aufgebracht sein. Ein Washcoat kann durch eintauchen, Spin-Coating oder durch Fluten aufgebracht werden. Dies erlaubt eine kostengünstige rasche Herstellung des Wärmetauschers bzw. von dessen Teilen.

In einigen Ausführungsformen der Erfindung kann die zweite Seite des Grundträgers und ein Gehäuseteil einen Fluidkanal begrenzen. Der Fluidkanal kann dazu vorgesehen sein, bei der Adsorption frei werdende Wärme aus dem Wärmetauscher abzuführen und/oder ein Brennstoff-/Luftgemisch zuzuführen, welches nachfolgend an der Oberfläche des Katalysators exotherm reagiert und hierdurch Adsorbate aus dem Sorptions-mittel austreibt.

In einigen Ausführungsformen der Erfindung kann der Wärmetauscher weiterhin zumindest eine Lambda-Sonde und/oder zumindest einen Temperatursensor enthalten. Die hierdurch erfassten Messwerte können einer Regeleinrichtung zugeführt werden, welche die Menge des zugeführten Brennstoff-/Luftgemisches und/oder den Brennstoffanteil im Brennstoff-/Luftgemisch steuert bzw. regelt, um auf diese Weise die im Wärmetauscher freigesetzte Wärmemenge zu kontrollieren. Hierdurch kann der Desorptionsprozess so erfolgen, dass das Sorptionsmittel nicht geschädigt wird. Weiterhin kann durch die Erfassung des Temperaturanstieges der Zeitpunkt bestimmt werden, in welchem das Sorptionsmittel vollständig entladen ist und die Zufuhr des Brennstoff-/Luftgemisches gestoppt werden sollte.

In einigen Ausführungsformen der Erfindung kann das Sorptionsmittel zumindest ein Metal Organic Framework und/oder Aktivkohle und/oder zumindest einen Zeolith und/oder zumindest ein Silicagel enthalten oder daraus bestehen. In anderen Ausführungsformen kann das Sorptionsmittel Zeolithähnlich sein und beispielsweise Silica-Aluminophosphat, Aluminophosphat enthalten. In wiederum einer anderen Ausführungsform kann das Sorptionsmittel covalent organic frameworks oder periodic mesoporous materials enthalten. Diese Sorptionsmittel erlauben es, den Wärmetauscher zur Entfeuchtung, zur Bindung von Gerüchen oder Schadstoffen oder als Teil einer Sorptionswärmepumpe bzw. einer Sorptionskältemaschine einzusetzen.

In einigen Ausführungsformen der Erfindung enthält der Katalysator des Wärmetauschers Platin und/oder Palladium und/oder Rhodium und/oder Indium und/oder Kupfer und/oder zumindest ein Oxid der genannten Metalle. An einem solchen Katalysator können beispielsweise Alkohole oder Kohlenwasserstoffe exotherm ohne offene Flamme umgesetzt werden, sodass bei Betrieb des Wärmetauschers keine Explosionsgefahr besteht.

In einigen Ausführungsformen der Erfindung kann das exotherme Umsetzen des Brennstoffes bei etwa 40°C bis etwa 850°C erfolgen. Die Temperatur kann auf das verwendete Sorptionsmittel abgestimmt sein, sodass eine unerwünschte Beschädigung des Wärmetauschers vermieden wird. In einigen Ausführungsformen der Erfindung kann das exotherme Umsetzen des Brennstoffes bei einer Temperatur von etwa 60°C bis etwa 200°C erfolgen. In wiederum einer anderen Ausführungsform der Erfindung kann das Umsetzen des Brennstoffes bei etwa 45°C bis etwa 130°C erfolgen. Diese Temperaturen reichen aus, um beispielsweise Wasser aus einem Sorptionsmittel auszutreiben.

In einigen Ausführungsformen der Erfindung kann das Sorptionsmittel und/oder der Katalysator vor dem Einbringen des Brennstoffes durch eine elektrische Heizeinrichtung und/oder durch Sorption einer Komponente des Gasstromes im Sorptionsmittel vorgewärmt werden. Hierdurch startet die Umsetzung des Brennstoff-/Luftgemisches unmittelbar, nachdem dieses in den zugehörigen Fluidkanal eingebracht und mit dem Katalysator in Kontakt gebracht wurde. Sofern die bei der Sorption einer Komponente des Gasstromes im Sorptionsmittel entstehende Wärme dazu eingesetzt wird, den Katalysator auf die Betriebstemperatur vorzuwärmen, wird keine zusätzliche elektrische Hilfsenergie benötigt, um den Wärmetauscher zu regenerieren.

Nachfolgend soll die Erfindung anhand von Figuren ohne Beschränkung des allgemeinen Erfindungsgedankens näher erläutert werden. Dabei zeigt:
- Figur 1: ein Ausführungsbeispiel der Erfindung beim Einsatz in einer Entfeuchtungs- bzw. Klimatisierungsanlage.
- Figur 2: zeigt einen Ausschnitt aus einem erfindungsgemäßen Wärmetauscher bei der Desorption.
- Figur 3: zeigt den Ausschnitt aus dem Wärmetauscher gemäß Figur 2 bei der Adsorption.
- Figur 4: zeigt eine alternative Ausführungsform des Wärmetauschers im Querschnitt.
- Figur 5: zeigt eine weitere Ausführungsform des Wärmetauschers im Querschnitt.
- Figur 6: zeigt die Verbindung des Katalysators, des Sorptionsmittels und des Grundträgers in einer ersten Ausführungsform.
- Figur 7: zeigt die Verbindung des Katalysators, des Sorptionsmittels und des Grundträgers in einer zweiten Ausführungsform.
- Figur 8: zeigt die Verbindung des Katalysators, des Sorptionsmittels und des Grundträgers in einer dritten Ausführungsform.
- Figur 9: zeigt die Verbindung des Katalysators, des Sorptionsmittels und des Grundträgers in einer vierten Ausführungsform.
- Figur 10: zeigt die Verbindung des Katalysators, des Sorptionsmittels und des Grundträgers in einer fünften Ausführungsform.

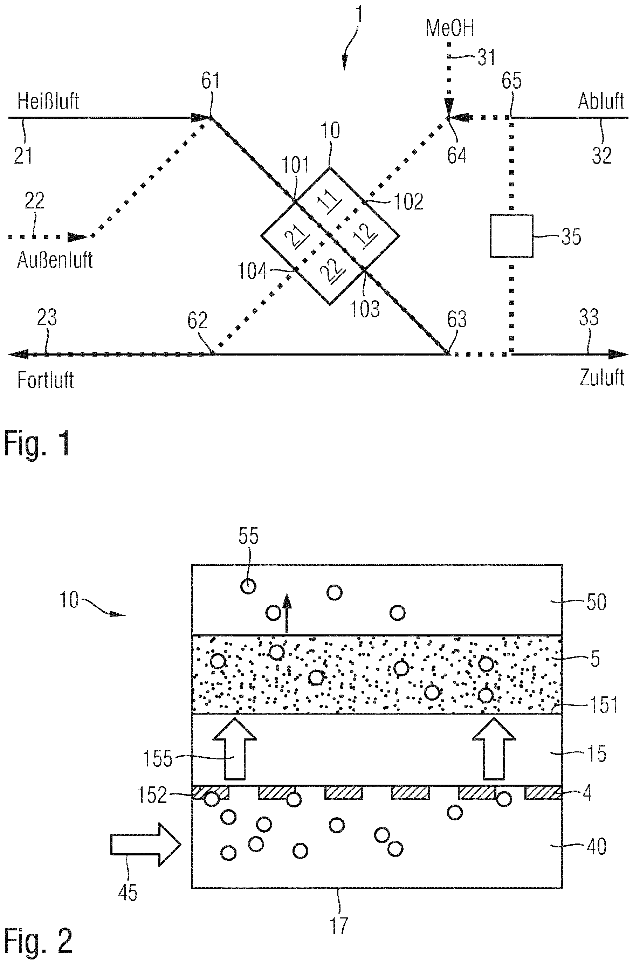

Anhand von Figur 1 wird ein Anwendungsbeispiel des erfindungsgemäßen Wärmetauschers erläutert. Es handelt sich um eine offene sorptive Entfeuchtungs- und Klimatisierungsanlage 1. Diese enthält eine erste Ansaugöffnung 21 und eine zweite Ansaugöffnung 22 für Umgebungsluft. Dabei kann der zweiten Ansaugöffnung 22 Außenluft zugeführt werden. Der ersten Ansaugöffnungen 21 kann Heißluft aus einer solarthermischen Anlage zugeführt werden. Weiterhin weist die Vorrichtung eine erste Abluftöffnung 23 auf, durch welche Luft aus dem Innenraum des Gebäudes sowie Abgase ins Freie abgeführt werden können.

Weiterhin steht die Vorrichtung über eine Entlüftung 32 und einer Belüftung 33 mit einem zu belüftenden Innenraum in Verbindung. Die Belüftung 33 dient dazu, erwärmte und/oder gekühlte und/oder entfeuchtete Luft dem Innenraum eines Gebäudes, eines Fahrzeuges oder eines Flugzeuges zuzuführen. Über die Entlüftung 32 kann Luft aus dem Innenraum abgeführt werden.

Schließlich weist die Vorrichtung eine Brennstoffzufuhr 31 für einen flüssigen oder gasförmigen Brennstoff auf. Im dargestellten Ausführungsbeispiel wird Methanol als Brennstoff verwendet, um den Wärmetauscher 10 zu erwärmen und dadurch das Sorptionsmittel zu regenerieren.

Der Wärmetauscher 10 der Vorrichtung 1 ist als Kreuzstromwärmetauscher ausgebildet, d. h. ein erster Fluidstrom kann dem Wärmetauscher über den Eingang 101 zugeführt und den Ausgang 103 abgeführt werden. Ein zweiter Fluidstrom kann über den zweiten Eingang 102 zugeführt und über den zweiten Ausgang 104 abgeführt werden. Im Kreuzstromwärmetauscher 10 ist ein Wärmeübergang vom ersten Fluidstrom auf den zweiten Fluidstrom möglich. Ein Stoffübergang wird jedoch durch entsprechende Wandungen verhindert. Der erste Eingang 101 mündet in einen Sorptionskanal, in welchem das zugeführte Fluid mit einem Sorptionsmittel in Kontakt gebracht werden kann.

Weiterhin weist die Vorrichtung 1 automatisch oder mechanisch arbeitende Ventile 61, 62, 63, 64 und 65 auf.

Durch die Schaltung dieser Ventile können unterschiedliche Betriebszustände realisiert werden.

In einem beispielhaft dargestellten ersten Betriebszustand kann Außenluft über die zweite Ansaugöffnung 22 zugeführt werden, welche im Wärmetauscher 10 entfeuchtet und nachfolgend dem Innenraum über die Belüftung 33 zugeführt wird. Hierzu wird der Eingang 101 des Wärmetauschers 10 über das Ventil 61 mit der zweiten Ansaugöffnung 22 verbunden und der Ausgang 103 des Wärmetauschers 10 wird über das Ventil 63 mit der Belüftung 33 verbunden. Neben einer Entfeuchtung kann die Außenluft alternativ oder zusätzlich auch von Schadstoffen und Gerüchen befreit werden, beispielsweise wenn das Sorptionsmittel Aktivkohle enthält oder daraus besteht. Diese Anwendung kann vorteilhaft zur Aufbereitung der zur Beheizung vorgesehenen Triebwerkszapfluft eines Flugzeuges verwendet werden, um diese von Kohlenwasserstoffen und Schmierstoffrückständen zu reinigen.

Wenn zeitgleich die Ventile 65, 65 und 62 entsprechend geschaltet werden, kann ein zweiter Volumenstrom von der Entlüftung 32 über die Ventile 65 und 64 zum zweiten Eingang 102 des Wärmetauschers 10 und weiter vom Ausgang 104 über das Ventil 62 zur Abluftöffnung 23 geleitet werden. Sofern an der Brennstoffzufuhr 31 Wasser zugeführt wird, welches nachfolgend verdampft, kann der von außen zugeführte Luftstrom zusätzlich gekühlt werden.

In einem beispielhaft dargestellten zweiten Betriebszustand kann zur Regeneration des Sorptionsmittels Heißluft aus einer Solaranlage über die erste Ansaugöffnung 21 zugeführt und über die Abluftöffnung 23 abgeführt werden. Hierzu wird der Heißluftstrom über das Ventil 61 zum Eingang 101 des Wärmetauschers 10 geleitet. Die mit dem Adsorbat beladene Heißluft verlässt den Wärmetauscher 10 über den Ausgang 103 und wird über die Ventile 63 und 62 abgeführt, ohne in den zu belüftenden Raum einzudringen.

In einem beispielhaft dargestellten dritten Betriebszustand kann die aus dem Raum abgeführte Abluft mit einem flüssigen oder gasförmigen Brennstoff vermischt werden, welcher über die Brennstoffzufuhr 31 zugeführt wird. Dies erlaubt die Regeneration des Sorptionsmittels, wenn keine hinreichende Wärmemenge aus der Solaranlage zur Verfügung steht.

Hierzu wird über die zweite Ansaugöffnung 22 dem ersten Eingang 101 des Wärmetauschers 10 Umgebungsluft zugeführt, um das Adsorbat abzuführen. Diese Luft verlässt den Wärmetauscher über den Ausgang 103 zum Ventil 63 und gelangt von dort zur Abluftöffnung 23. Ein zweiter Gasstrom kann von der Entlüftung 32 über den zweiten Eingang 102 zugeführt werden. Diesem Gasstrom wird ein Brennstoff zugeführt. Im dargestellten Ausführungsbeispiel kann hierzu beispielsweise Methanol verwendet werden. Das Methanol wird am Katalysator im Wärmetauscher 10 exotherm umgesetzt. Die Produkte dieser Reaktion verlassen den Wärmetauscher über den Ausgang 104 und werden über das Ventil 62 zur Abluftöffnung 23 geleitet. Durch die Erwärmung des Sorptionsmittels werden angelagerte Adsorbate ausgetrieben und mit dem ersten Gasstrom über den Ausgang 103 abgeführt.

Optional kann der zweite Gasstrom auch über das Ventil 63 entnommen und dem Wärmetauscher über die Ventile 65 und 64 zugeführt werden, so dass die Luft zur Umsetzung des Brennstoffes nicht aus dem zu klimatisierenden Raum stammt.

Zum Starten der katalytischen Reaktion kann der zweite Gasstrom mit der optionalen Heizeinrichtung 35 vorgewärmt werden. Die elektrische Heizeinrichtung 35 kann dazu eingerichtet sein, den aus dem Raum abgeführten Abluftstrom 32 und das Brennstoff-/Luftgemisch auf eine Temperatur über 40°C, über 50°C oder über 60°C zu erwärmen, um die Umsetzung am Katalysator im Wärmetauscher 10 zu starten. Hierzu kann die elektrische Heizeinrichtung eine Leistung von etwa 100 W bis etwa 1000 W oder zwischen etwa 200 W und etwa 600 W oder zwischen etwa 400 W und 550 W aufweisen. Die Betriebsdauer der elektrischen Heizeinrichtung 35 kann in einigen Ausführungsformen der Erfindung zwischen etwa 1 Minute und etwa 5 Minuten betragen.

In einem beispielhaft dargestellten vierten Betriebszustand kann die Desorption durch katalytische Umsetzung eines Brennstoffes gemäß dem dritten Betriebszustand durch eine gleichzeitige Heißluftzufuhr gemäß dem zweiten Betriebszustand unterstützt werden.

In einem beispielhaft dargestellten fünften Betriebszustand kann die aus der Solaranlage entnommene Heißluft an der ersten Ansaugöffnung 21 auch zur Erwärmung der Raumluft über die Belüftung 33 verwendet werden, um auf diese Weise Heizenergie einzusparen.

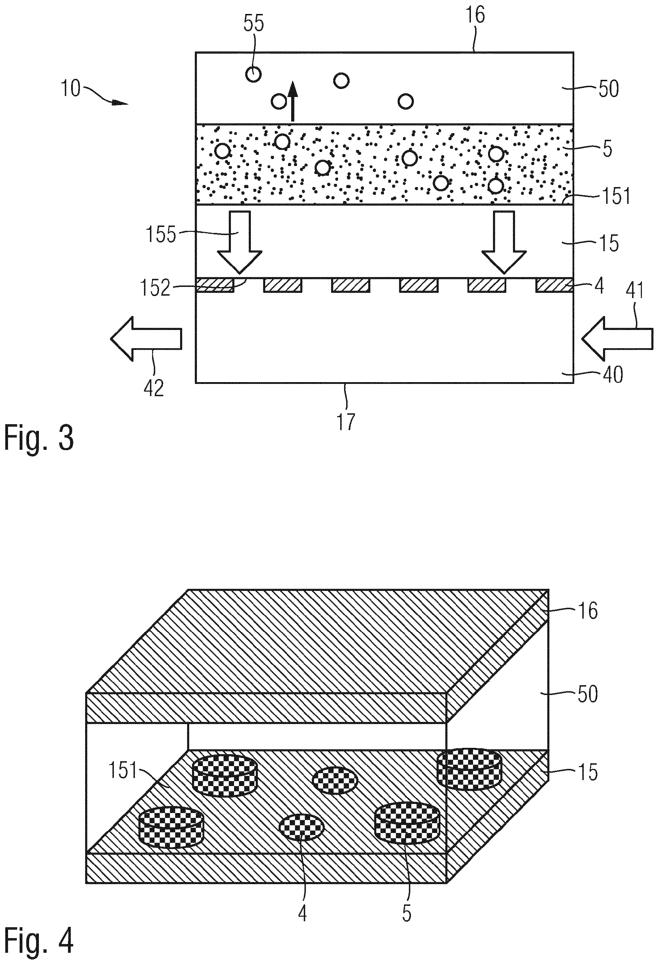

Anhand der Figuren 2 und 3 wird ein Ausschnitt aus dem Wärmetauscher 10 in unterschiedlichen Betriebszuständen der Adsorption und der Desorption dargestellt. Der Wärmetauscher 10 kann beispielsweise Teil einer offenen Klimatisierungs- und Entfeuchtungseinrichtung 1 sein, wie anhand von Figur 1 erläutert. In anderen Ausführungsformen der Erfindung kann der Wärmetauscher 10 Teil einer Sorptionswärmepumpe oder einer Kältemaschine sein.

Figur 2 zeigt einen Betriebszustand des Wärmetauschers 10, in welchem Adsorbate 55 aus dem Sorptionsmittel 55 ausgetrieben werden.

Der Wärmetauscher 10 weist zumindest einen Grundträger 15 auf. Der Grundträger 15 weist eine erste Seite 151 und eine gegenüberliegende Seite 152 auf. Der Grundträger 15 kann aus einem Material guter Wärmeleitfähigkeit hergestellt sein, beispielsweise Aluminium oder Kupfer. In anderen Ausführungsformen der Erfindung kann der Grundträger 15 auch aus Kunststoffen bestehen, welche mit Füllstoffen versehen sein können, welche die Wärmeleitfähigkeit erhöhen.

Die erste Seite 151 des Grundträgers 15 ist mit einem Sorptionsmittel 5 versehen. Das Sorptionsmittel 5 kann beispielsweise ein Silicagel, ein Zeolith oder Aktivkohle sein oder diese Materialien enthalten.

Auf der zweiten Seite 152 des Grundträgers 15 ist ein Katalysator 4 angeordnet. Der Katalysator 4 kann beispielsweise ein an sich bekannter Edelmetallkatalysator sein.

Die zweite Seite 152 des Grundträgers 15 begrenzt zusammen mit einer Gehäusewandung 17 einen Fluidkanal 40. In gleicher Weise begrenzt die Oberfläche des Sorptionsmittels 5 auf der ersten Seite 151 des Grundträgers 15 zusammen mit einer Gehäusewandung 16 einen Sorptionskanal 50.

Es ist darauf hinzuweisen, dass der Fluidkanal 40 optional ist und in anderen Ausführungsformen der Erfindung auch entfallen kann, wie nachstehend noch erläutert werden wird.

In dem in Figur 2 dargestellten Betriebszustand wird ein Brennstoff 45 in den Fluidkanal 40 eingebracht. Der Brennstoff 45 kann flüssig oder gasförmig sein und beispielsweise einen Alkohol enthalten. In anderen Ausführungsformen der Erfindung kann der Brennstoff 45 aus einem Gemisch aus Kohlenwasserstoffen unterschiedlicher Kettenlängen bestehen. In diesem Fall kann der Brennstoff 45 beispielsweise Benzin oder Erdgas sein.

Der Brennstoff 45 wird an der Oberfläche des Katalysators 4 umgesetzt. Bevorzugt erfolgt diese ohne offene Flamme, um eine Verpuffung und eine Gefährdung der Benutzer des Wärmetauschers 10 zu vermeiden. Die durch eine sogenannte stille Verbrennung freigesetzte Wärme 155 durchdringt den Grundträger 15 und wirkt auf das Sorptionsmittel 5 ein. Hierdurch werden anhaftende Adsorbate 55 aus dem Sorptionsmittel 5 ausgetrieben. Das Sorptionsmittel 5 kann auf diese Weise regeneriert werden, um in einem nachfolgenden Verfahrensschritt wieder mit Adsorbaten 55 beladen zu werden.

Die Umsetzung des Brennstoffes 45 am Katalysator 4 kann so gesteuert oder geregelt werden, dass sich eine vorgebbare Temperatur bzw. ein Temperaturverlauf und/oder eine Temperaturverteilung am Sorptionsmittel 5 ergibt. Beispielsweise kann die Temperatur kontinuierlich von etwa 40° bis etwa 120° ansteigen, um auf diese Weise zunächst schwach gebundene Adsorbate 55 aus dem Sorptionsmittel 5 auszutreiben und nachfolgend stärker gebundene Adsorbate aus dem Sorptionsmittel 5 auszutreiben. In einigen Ausführungsformen der Erfindung kann aus der gemessenen Temperatur bei bekanntem Wärmestrom 155 auf den Zustand bzw. den Beladungsgrad des Sorptionsmittels 5 geschlossen werden, sodass die Zufuhr des Brennstoffes 45 beispielsweise bei Erreichen einer vorgebbaren Temperaturschwelle beendet wird.

Figur 3 zeigt einen nachfolgenden oder auch vorangehenden Verfahrensschritt. Gleiche Bezugszeichen bezeichnen gleiche Bestandteile der Erfindung, sodass sich die nachfolgende Beschreibung auf die wesentlichen Unterschiede beschränkt.

Gemäß Figur 3 wird dem Sorptionskanal 50 ein Fluidstrom zugeführt, welcher zumindest zwei unterschiedliche Komponenten enthält. Beispielsweise kann der Fluidstrom Umgebungsluft sein, welcher mit Wasser oder Schadstoffen beladen ist, wie z.B. VOC. In anderen Ausführungsformen der Erfindung kann der Fluidstrom ein Wasser/Alkoholgemisch sein. In wiederum anderen Ausführungsformen der Erfindung kann im Sorptionskanal 50 ein schadstoffbelasteter Gasstrom geführt sein, beispielsweise ein Abgas.

Das Sorptionsmittel 5 ist dazu eingerichtet, zumindest eine vorgebbare Komponente des Gasstromes als Adsorbat 55 anzulagern. Beispielsweise kann aus einem Wasser-/AlkoholGemisch der Alkohol abgeschieden und im Sorptionsmittel 5 gebunden werden. In anderen Ausführungsformen der Erfindung kann das Sorptionsmittel 5 mit Wasser gesättigt werden, wenn im Sorptionskanal 50 ein wasserhaltiger Gasstrom strömt, welcher entfeuchtet werden soll.

Durch die Adsorption der Adsorbate 55 im Sorptionsmittel 5 wird Wärme frei, welche als Wärmestrom 155 den Grundträger 15 durchdringt. Die Wärme kann durch einen Fluidstrom abgeführt werden, welcher dem Fluidkanal 40 als kaltes Fluid 41 zugeführt wird und als erwärmtes Fluid 42 abgeführt wird. Der Fluidstrom 41 kann beispielsweise Kühlwasser sein. In anderen Ausführungsformen der Erfindung kann der Fluidstrom 41 Raumluft sein, welche im Fluidkanal 40 erwärmt wird und als Heizenergie dem Raum wieder zugeführt wird. In anderen Ausführungsformen der Erfindung kann die frei werdende Wärme als Prozesswärme für industrielle Herstellungs- oder Trocknungsprozesse verwendet werden. In diesem Fall kann der erwärmte Gasstrom 42 dem trocknungsgut zugeführt werden und der feuchtigkeitsbeladene Gasstrom nach Passieren des Trocknungsgutes wieder dem Sorptionskanal 50 zugeführt werden, sodass der Wärmetauscher 10 zumindest einen Teil der erforderlichen Prozesswärme für den Trocknungsprozess durch Adsorption des Wassers 55 selbst erzeugt.

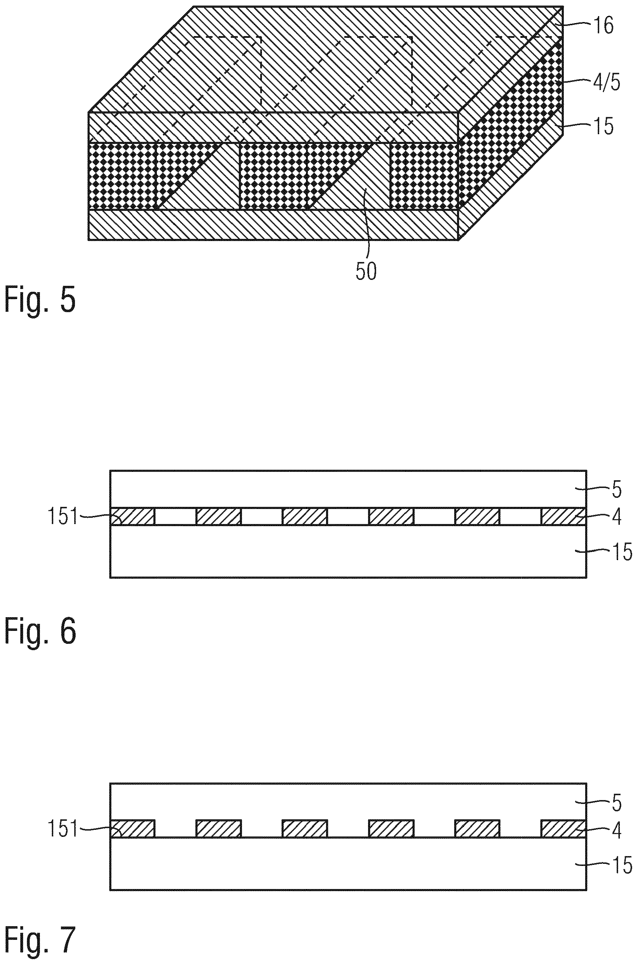

Anhand der Figuren 4 und 5 werden weitere Ausführungsformen der Erfindung erläutert, welche auf einen zusätzlichen Fluidkanal 40 verzichten.

Die Ausführungsform gemäß Figur 4 weist einen Sorptionskanal 50 auf, welcher durch ein Gehäuseteil 16 und einen Grundträger 15 begrenzt ist. Der Grundträger 15 weist eine erste Seite 151 auf, auf welcher zumindest ein Sorptions-mittel 5 und zumindest ein Katalysator 4 jeweils als Teilbeschichtung aufgebracht ist. Somit kann ein Gasstrom konditioniert bzw. entfeuchtet werden, indem dieser durch den Sorptionskanal 50 strömt und dabei mit dem Sorptions-mittel 5 in Kontakt kommt.

Zur Regeneration kann dem Sorptionskanal 50 ein Brennstoff-/Luftgemisch zugeführt werden, welches an den Oberflächen des Katalysators 4 exotherm umgesetzt wird. Dabei kann die frei werdende Wärme entweder durch den Gasstrom oder durch Wärmeleitung im Grundträger 15 auf das Sorptionsmittel 5 übertragen werden.

Die Ausführungsform gemäß Figur 5 zeigt eine Mehrzahl von Sorptionskanälen 50, welche jeweils durch stabförmige Bauteile begrenzt werden, welche sowohl das Sorptions-mittel 5 als auch den Katalysator 4 enthalten. Sorptions-mittel und Katalysator können entweder als Teilbeschichtung vorliegen, wie vorstehend beschrieben. In anderen Ausführungsformen der Erfindung kann das Sorptionsmittel 5 mit dem Katalysator 4 dotiert werden.

Anhand der Figuren 6 bis 10 werden unterschiedliche Ausführungsformen erläutert, welche jeweils die Kombination des Sorptionsmittels 5 und des Katalysators 4 auf dem Grundträger 15 zeigen. Gleiche Bestandteile der Erfindung sind dabei mit gleichen Bezugszeichen versehen, sodass sich die nachfolgende Beschreibung auf die wesentlichen Unterschiede beschränkt.

Gemäß Figur 6 wird der Katalysator als Voll- oder Teilbeschichtung auf der ersten Seite 151 des Grundträgers 15 aufgebracht. Der Katalysator kann in diesem Fall durch Spincoating bzw. als Washcoat oder durch PVD- oder CVD-Techniken aus der Gasphase aufgebracht werden. Diese Verfahren erlauben es, sowohl metallische als auch keramische Katalysatoren 4 auf den Grundträger 15 abzuscheiden.

Auf der so entstandenen Oberfläche des Katalysators 4 kann eine Schicht aus Sorptionsmittel 5 aufgebracht werden, beispielsweise durch Verpressen oder Verkleben. Optional können in der so entstandenen Beschichtung aus Sorptions-mittel 5 und Katalysator 4 Strömungskanäle ausgebildet sein, über welche das Brennstoff-/Luftgemisch zugeführt werden kann.

Auf diese Weise wird die am Katalysator durch die Umsetzung des Brennstoffes erzeugte Wärme unmittelbar dem Sorptions-mittel 5 zugeführt.

Figur 7 zeigt eine alternative Ausführungsform, bei welcher das Sorptionsmittel 5 beispielsweise aus wässriger Lösung oder durch Aufdampfen auf der Oberfläche des Katalysators 4 abgeschieden wird. Auf diese Weise füllt das Sorptionsmittel 5 auch die Zwischenräume zwischen einzelnen Teilflächen des Katalysators 4 aus, wenn der Katalysator 4 nur eine Teilbeschichtung des Grundträgers 15 bildet.

Das Brennstoff-/Luftgemisch kann in diesem Fall durch das Sorptionsmittel 5 an die Oberfläche des Katalysators 4 diffundieren, sodass die bei der Umsetzung erzeugte Wärme unmittelbar auf das Sorptionsmittel 5 einwirkt.

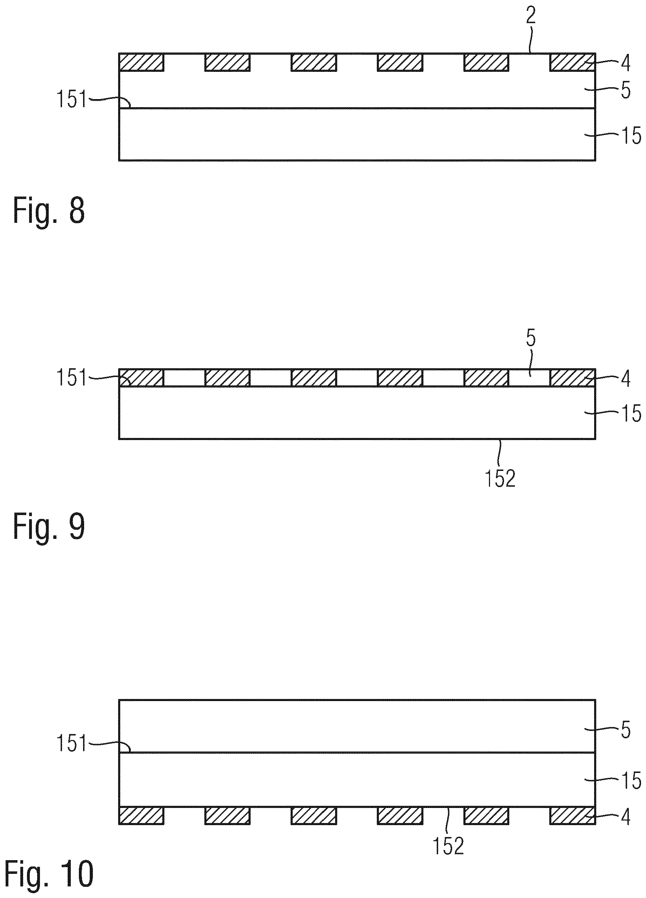

Figur 8 zeigt eine Ausführungsform, bei welcher auf dem Grundträger 15 zunächst das Sorptionsmittel 5 aufgebracht wird. Dies kann beispielsweise durch Druckverfahren, durch Aufrakeln oder durch andere, an sich bekannte Beschichtungsverfahren erfolgen.

Auf der Oberfläche des Sorptionsmittels 5 wird der Katalysator 4 abgeschieden. Dies kann in einigen Ausführungsformen der Erfindung als Teilbeschichtung erfolgen, sodass Teilflächen 2 des Sorptionsmittels 5 weiterhin dem Sorptionskanal 50 zugewandt sind. Hierdurch ist einerseits eine gute Adsorption der gewünschten Komponente des Gasstromes im Sorptionsmittel 5 möglich. Darüber hinaus ist die Oberfläche des Katalysators 4 dem Brennstoff-/Luftgemisch zugewandt, sodass die Umsetzung mit größerer Effizienz erfolgt und aufgrund der fehlenden Diffusion ein schnelles Ansprechen ermöglicht ist.

Figur 9 zeigt eine weitere Ausführungsform, bei welcher sowohl das Sorptionsmittel 5 als auch der Katalysator 4 jeweils eine Teilbeschichtung der ersten Seite 151 des Grundträgers 15 bilden. Die im Vergleich zu Figur 8 geringere Menge des Sorptionsmittels 5 kann rascher erwärmt und abgekühlt werden, sodass ein solcher Wärmetauscher eine kürzere Zyklusdauer ermöglichen kann.

Figur 10 zeigt wiederum die bereits aus Figur 2 und Figur 3 bekannte Ausführungsform, bei welcher das Sorptionsmittel 5 und der Katalysator 4 auf gegenüberliegenden Seiten des Grundträgers 15 angeordnet sind. In diesem Fall wird die am Katalysator 4 erzeugte Wärme durch den Grundträger 15 zum Sorptionsmittel 5 geleitet.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Aus-führungsformen definieren, so dient diese Bezeichnung der Unterscheidung zweier gleichartiger Ausführungsformen, ohne eine Rangfolge festzulegen.

## Patentansprüche

1. Wärmetauscher (10) mit zumindest einem Sorptionskanal (50), in welchem ein Sorptionsmittel (5) angeordnet ist und welcher von einem Fluid durchströmbar ist, wobei der Wärmetauscher zumindest einen Katalysator (4) enthält, mit welchem ein Brennstoff (45) exotherm umsetzbar ist, so dass die entstehende Wärme (155) zumindest teilweise dem Sorptionsmittel (5) zuführbar ist,
**dadurch gekennzeichnet, dass** der Wärmetauscher weiterhin einen Grundträger (15) mit einer ersten Seite (151) und einer gegenüberliegenden zweiten Seite (152) enthält, wobei der zumindest eine Katalysator (4) auf der zweiten Seite (152) angeordnet ist und das Sorptions-mittel (5) auf der ersten Seite (151) angeordnet ist.

2. Wärmetauscher nach Anspruch 1, **dadurch gekennzeichnet, dass** der Katalysator (4) und/oder das Sorptionsmittel (5) durch Siebdruck und/oder Aufrakeln und/oder durch Sputtern und/oder durch Washcoating des Grundträgers (15) aufgebracht sind.

3. Wärmetauscher nach einem der Ansprüche 1 bis 2, **dadurch gekennzeichnet, dass** die zweite Seite (152) des Grundträgers (15) und ein Gehäuseteil (17) einen Fluidkanal (40) begrenzen.

4. Wärmetauscher nach einem der Ansprüche 1 bis 3, weiterhin enthaltend zumindest eine Lambda-Sonde und/oder zumindest einen Temperatursensor.

5. Wärmetauscher nach einem der Ansprüche 1 bis 4, **dadurch gekennzeichnet, dass** das Sorptionsmittel (5) zumindest ein Metal Organic Framework und/oder Aktivkohle und/oder zumindest einen Zeolith und/oder zumindest ein Silicagel und/oder zeolithartige Sorptionsmaterialien (z.B. auch Schichtsilikate) und/oder Aluminophosphat und/oder Silica-Aluminophosphat und/oder Covalent Organic Framework enthält oder daraus besteht und/oder dass der Katalysator (4) Platin und/oder Palladium und/oder Rhodium und/oder Indium und/oder Kupfer und/oder deren Oxide enthält oder daraus besteht.

6. Vorrichtung (1) zur Beheizung und/oder Befeuchtung und/oder Entfeuchtung eines Gasstroms mit einem Wärmetauscher (10) nach einem der Ansprüche 1 bis 5.

7. Verfahren zum Erwärmung und/oder Konditionieren eines Gasstromes mit zumindest folgenden Schritten:
Zuführen eines mehrere verschiedene Komponenten enthaltenden Gasstromes in einen Sorptionskanal (50), welcher Teil eines Wärmetauschers (10) ist und in welchem ein Sorptionsmittel (5) angeordnet ist, so dass zumindest eine Komponente (55) im Sorptionsmittel (5) gebunden wird; und
Zuführen und exothermes Umsetzen zumindest eines Brennstoffes (45) unter Einwirkung eines Katalysators (4), so dass zumindest eine Komponente (55) des Gasstromes aus dem Sorptionsmittel (5) ausgetrieben wird, wobei der Katalysator (4) im Inneren und/oder an einer äußeren Begrenzungswand des Wärmetauschers (10) angeordnet ist,
**dadurch gekennzeichnet, dass**
ein Grundträger (15) mit einer ersten Seite (151) und einer gegenüberliegenden zweiten Seite (152) eingesetzt wird, wobei der zumindest eine Katalysator (4) auf der zweiten Seite angeordnet ist und das Sorptions¬mittel (5) auf der ersten Seite (151) angeordnet ist und die Sorption einer Komponente (55) des Gasstromes im Sorptions¬mittel (5) auf einer Seite und die katalytische Umsetzung des Brennstoffes (45) auf der anderen Seite des Grundträgers (15) erfolgt.

8. Verfahren nach Anspruch 7, **dadurch gekennzeichnet, dass** der Brennstoff (45) ausgewählt ist aus Methanol und/oder H₂ und/oder Methan und/oder Propan oder Benzin und/oder
dass das Sorptionsmittel (4) zumindest ein Metal Organic Framework und/oder Aktivkohle und/oder zumindest einen Zeolith und/oder zumindest ein Silicagel enthält oder daraus besteht
und/oder
dass der Katalysator (5) Palladium und/oder Rhodium und/oder Indium und/oder Kupfer und/oder deren Oxide enthält oder daraus besteht
und/oder
das die zumindest eine Komponente (55) Wasser und/oder flüchtige organische Verbindungen enthält oder daraus besteht.

9. Verfahren nach einem der Ansprüche 7 oder 8, **dadurch gekennzeichnet, dass** durch das exotherme Umsetzen des Brennstoffes (45) das Sorptionsmittel (5) auf etwa 40°C bis etwa 850°C oder auf auf etwa 60°C bis etwa 200°C oder auf auf etwa 45°C bis etwa 130°C erwärmt wird.

10. Verfahren nach einem der Ansprüche 7 bis 9, **dadurch gekennzeichnet, dass** der Brennstoff (45) mittels einer Düse als Aerosol eingebracht wird.

11. Verfahren nach einem der Ansprüche 7 bis 10, **dadurch gekennzeichnet, dass** das Sorptionsmittel (5) und/oder der Katalysator (4) vor dem Einbringen des Brennstoffes (45) durch eine elektrische Heizeinrichtung (35) und/oder durch Sorption einer Komponente (55) des Gasstromes im Sorptionsmittel (5) erwärmt wird.

## Claims

1. Heat exchanger (10) having at least one sorption duct (50), in which a sorbent (5) is arranged and through which a fluid can flow, wherein the heat exchanger also contains at least one catalyst (4), by means of which a fuel (45) can be reacted exothermically such that at least some of the resulting heat (155) can be supplied to the sorbent (5), **characterized in that** the heat exchanger further contains a main support (15) having a first side (151) and an opposite second side (152), wherein the at least one catalyst (4) is arranged on the second side (152) and the sorbent (5) is arranged on the first side (151).

2. Heat exchanger according to claim 1, **characterized in that** the catalyst (4) and/or the sorbent (5) are applied by screen printing and/or with a doctor blade and/or by sputtering and/or by washcoating of the main support (15).

3. Heat exchanger according to any of claims 1 to 2, **characterized in that** the second side (152) of the main support (15) and a housing part (17) confine a fluid channel (40).

4. Heat exchanger according to any of claims 1 to 3, further containing at least one lambda probe and/or at least one temperature sensor.

5. Heat exchanger according to any of claims 1 to 4, **characterized in that** the sorbent (5) contains, or consists of, at least one metal organic framework and/or activated carbon and/or at least one zeolite and/or at least one silica gel and/or zeolite-like sorption materials (e.g. also layer silicates) and/or aluminophosphate and/or silica aluminophosphate and/or covalent organic framework and/or that the catalyst (4) contains, or consists of, platinum and/or palladium and/or rhodium and/or indium and/or copper and/or the oxides thereof.

6. Device (1) for heating and/or humidifying and/or dehumidifying a gas stream by means of a heat exchanger (10) according to any of claims 1 to 5.

7. Method for heating and/or conditioning a gas stream, comprising at least the following steps:
supplying a gas stream containing a plurality of different components into a sorption duct (50), which is part of a heat exchanger (10) and
in which a sorbent (5) is arranged, such that at least one component (55) is bonded in the sorbent (5); and
supplying and exothermically reacting at least one fuel (45) under the influence of a catalyst (4), such that at least one component (55) of the gas stream is expelled from the sorbent (5), wherein the catalyst (4) is arranged in the interior and/or on an outer boundary wall of the heat exchanger (10),
**characterized in that**
a main support (15) having a first side (151) and an opposite second side (152) is used, wherein the at least one catalyst (4) is arranged on the second side and the sorbent (5) is arranged on the first side (151) and the sorption of a component (55) of the gas stream in the sorbent (5) takes place on one side and the fuel (45) is catalytically reacted on the other side of the main support (15).

8. Method according to claim 7, **characterized in that** the fuel (45) is selected from methanol and/or H₂ and/or methane and/or propane or gasoline
and/or
that the sorbent (4) contains, or consists of, at least one metal organic framework and/or activated carbon and/or at least one zeolite and/or at least one silica gel,
and/or
that the catalyst (5) contains, or consists of, palladium and/or rhodium and/or indium and/or copper and/or the oxides thereof and/or
that the at least one component (55) contains, or consists of, water and/or volatile organic compounds.

9. Method according to any of claims 7 or 8, **characterized in that** the sorbent (5) is heated to about 40°C to about 850°C or to about 60°C to about 200°C or to about 45°C to about 130°C by exothermically reacting the fuel (45).

10. Method according to any of claims 7 to 9, **characterized in that** the fuel (45) is introduced as an aerosol by means of a nozzle.

11. Method according to any of claims 7 to 10, **characterized in that** the sorbent (5) and/or the catalyst (4) is heated by means of an electric heater (35) and/or by the sorption of a component (55) of the gas stream in the sorbent (5) before the fuel (45) is introduced.

## Revendications

1. Echangeur de chaleur (10) comportant au moins un canal de sorption (50) dans lequel est disposé un sorbant (5) et qui peut être traversé par un fluide, l'échangeur de chaleur contenant en outre au moins un catalyseur (4) avec lequel un combustible (45) peut réagir par voie exothermique, de sorte que la chaleur (155) qui en résulte peut être fournie au moins partiellement au sorbant (5),
**caractérisé en ce que**
l'échangeur de chaleur comprend en outre un support de base (15) ayant une première face (151) et une seconde face opposée (152), et
ledit au moins un catalyseur (4) est disposé sur la seconde face (152) et le sorbant (5) est disposé sur la première face (151).

2. Echangeur de chaleur selon la revendication 1, **caractérisé en ce que** le catalyseur (4) et/ou le sorbant (5) sont appliqués par sérigraphie et/ou par raclage et/ou par pulvérisation cathodique et/ou par revêtement par lavage du support de base (15).

3. Echangeur de chaleur selon l'une des revendications 1 à 2, **caractérisé en ce que** la seconde face (152) du support de base (15) et une partie de boîtier (17) délimitent un canal à fluide (40).

4. Echangeur de chaleur selon l'une des revendications 1 à 3, comprenant en outre au moins une sonde lambda et/ou au moins un capteur de température.

5. Echangeur de chaleur selon l'une des revendications 1 à 4, **caractérisé en ce que** le sorbant (5) contient ou consiste en au moins une structure organométallique (Metal Organic Framework) et/ou du charbon actif et/ou au moins une zéolite et/ou au moins un gel de silice et/ou des matériaux sorbants de type zéolite (par exemple également des silicates en couches) et/ou un aluminophosphate et/ou un silice-aluminophosphate et/ou une structure organique covalente (Covalent Organic Framework), et/ou **en ce que** le catalyseur (4) contient ou consiste en platine et/ou palladium et/ou rhodium et/ou indium et/ou cuivre et/ou leurs oxydes.

6. Dispositif (1) de chauffage et/ou d'humidification et/ou de déshumidification d'un flux de gaz avec un échangeur de chaleur (10) selon l'une des revendications 1 à 5.

7. Procédé de chauffage et/ou de conditionnement d'un flux de gaz, comprenant au moins les étapes suivantes consistant à :
alimenter un flux de gaz contenant plusieurs composants différents dans un canal de sorption (50) qui fait partie d'un échangeur de chaleur (10) et dans lequel est disposé un sorbant (5), de sorte qu'au moins un composant (55) soit lié dans le sorbant (5) ; et
alimenter et faire réagir par voie exothermique au moins un combustible (45) sous l'action d'un catalyseur (4), de sorte qu'au moins un composant (55) du flux de gaz est expulsé du sorbant (5), le catalyseur (4) étant disposé à l'intérieur et/ou sur une paroi de délimitation extérieure de l'échangeur de chaleur (10),
**caractérisé en ce que**
il est prévu un support de base (15) ayant une première face (151) et une seconde face opposée (152), ledit au moins un catalyseur (4) étant disposé sur la seconde face (152) et le sorbant (5) étant disposé sur la première face (151), et
la sorption d'un composant (55) du flux de gaz dans le sorbant (5) se produit sur une face, et la réaction catalytique du combustible (45) se produit sur l'autre face du support de base (15).

8. Procédé selon la revendication 7, **caractérisé en ce que** le combustible (45) est choisi parmi le méthanol et/ou H₂ et/ou le méthane et/ou le propane ou la benzine, et/ou
**en ce que** le sorbant (4) contient ou consiste en au moins une structure organométallique (Metal Organic Framework) et/ou du charbon actif et/ou au moins une zéolite et/ou au moins un gel de silice,
et/ou
**en ce que** le catalyseur (5) contient ou consiste en palladium et/ou rhodium et/ou indium et/ou cuivre et/ou leurs oxydes,
et/ou
**en ce que** ledit au moins un composant (55) contient ou consiste en de l'eau et/ou des composés organiques volatils.

9. Procédé selon l'une des revendications 7 ou 8, **caractérisé en ce que**, par la réaction exothermique du combustible (45), le sorbant (5) est chauffé à une température d'environ 40°C à environ 850°C, ou d'environ 60°C à environ 200°C, ou d'environ 45°C à environ 130°C.

10. Procédé selon l'une des revendications 7 à 9, **caractérisé en ce que** le combustible (45) est introduit sous forme d'aérosol au moyen d'une buse.

11. Procédé selon l'une des revendications 7 à 10, **caractérisé en ce qu'**avant l'introduction du combustible (45), le sorbant (5) et/ou le catalyseur (4) est chauffé par un dispositif de chauffage électrique (35) et/ou par sorption d'un composant (55) du flux de gaz dans le sorbant (5).
